# EUROPÄISCHE PATENTSCHRIFT

(11) **EP 0 423 153 B1**
(45) Veröffentlichungstag und Bekanntmachung des Hinweises auf die Patenterteilung: **18.08.1993**
(21) Anmeldenummer: 89906704.5
(22) Anmeldetag: 06.06.1989
(51) Int. Cl.: G01S 15/10, G01S 7/52

(54) **VERFAHREN UND VORRICHTUNG ZUR LAUFZEITMESSUNG MITTELS ULTRASCHALL IN FLÜSSIGEN ODER FESTEN MATERIALIEN NACH DER IMPULS-REFLEXIONSMETHODE**
PROCESS AND DEVICE FOR ULTRASONIC MEASUREMENT OF TRANSIT TIME IN LIQUIDS OR SOLIDS BY THE PULSE REFLECTION METHOD
PROCEDE ET DISPOSITIF DE MESURE ULTRASONIQUE DE LA DUREE DE PARCOURS DANS DES MATERIAUX SOLIDES OU LIQUIDES PAR LA METHODE DE REFLEXION D'IMPULSIONS

(30) Priorität: 05.07.1988 DE 3822699
(43) Veröffentlichungstag der Anmeldung: 24.04.1991
(73) Patentinhaber: KRAUTKRÄMER GmbH & Co., D-50354 Hürth (DE)
(72) Erfinder: PRAUSE, Reinhard, D-5205 St. Augustin (DE); GOEDECKE, Hartmut, D-6290 Weilburg (DE)
(74) Vertreter: Bauer, Wulf, Dr.
(86) Internationale Anmeldenummer: DE8900373
(87) Internationale Veröffentlichungsnummer: WO9000745

(56) Entgegenhaltungen:
- EP-A- 0 174 090
- DE-A- 2 853 170
- FR-A- 2 394 811
- US-A- 4 169 263
- US-A- 4 315 325
- IEEE Transactions on Biomedical Engineering, volume BME-27 No. 5,May 1980, IEEE, (US), M.S.Hostetler et al.:"A microprocessor- controlled echocardiographic tracking system", pages 249-253; right hand column, last paragraph - page 250, left hand column, paragraph 1 with figure 1

## Beschreibung

Die Erfindung bezieht sich auf ein Verfahren zur Laufzeitmessung nach dem Oberbegriff des Patentanspruchs 1, sowie auf eine zur Durchführung dieses Verfahrens geeignete Vorrichtung entsprechend dem Oberbegriff des Patentanspruchs 5.

Bei den bekannten Verfahren dieser Art und der nach diesem Verfahren arbeitenden Vorrichtung ist es üblich, störende Nachschwinger im Startecho, das ist entweder das Eintritts- oder ein Rückwandecho, dadurch auszublenden, daß während einer Meßsperrzeit die Laufzeitmessung nicht gestoppt werden kann. Die Meßsperrzeit (Totzeit) ist in ihrer Zeitdauer einstellbar, sie muß zwangsläufig kürzer sein als die zu messende Laufzeit. Eventuelle Nutzsignale innerhalb der Meßsperrzeit können nicht erfaßt werden, sie bleiben also unberücksichtigt. Dies hat zur Folge, daß die kleinste meßbare Laufzeitdauer durch die Länge der Meßsperrzeit vorgegeben ist, es können nur Laufzeitdauern erfaßt werden, die größer sind als die Meßsperrzeit.

Die Meßsperrzeit selbst muß so eingestellt werden, daß die Nachschwinger des Startechos die Laufzeitmessung nicht stoppen können. Bei dem vorbekannten Verfahren und der nach diesem Verfahren arbeitenden Vorrichtung bestimmen demgemäß die Amplituden und der zeitliche Verlauf der Nachschwinger im wesentlichen die kürzeste meßbare Laufzeitdauer. Nun sind die Nachschwinger von verschiedenen Faktoren abhängig, im wesentlichen jedoch von der Bedämpfung des Prüfkopfes, der möglichst einen Stoßwellencharakter haben soll und von der Beschaffenheit der Oberfläche des zu prüfenden Körpers bzw. den Materialeigenschaften. Je rauher die Oberfläche des zu prüfenden Körpers ist, umso gedehnter sind das Startechosignal sowie die folgenden Rückwandechos und umso länger muß die Meßsperrzeit eingestellt werden. Probleme bei dem bekannten Verfahren und der nach ihr arbeitenden Vorrichtung treten daher beispielsweise bei rauhen, insbesondere bei korrodierten Oberflächen zu testender Körper auf. So muß bei Einsatz des vorbekannten Verfahrens zur Prüfung von Rohrleitungen, insbesondere bei Innenprüfung durch einen Molch, auf Korrosion aufgrund der rauhen Oberflächen eine relativ große Totzeit eingestellt werden, wodurch die minimal auflösbare Restwanddicke ungünstig beeinflußt wird.

Hier setzt nun die Erfindung ein. Sie hat es sich zur Aufgabe gemacht, das Verfahren der eingangs genannten Art und die nach diesem Verfahren arbeitende Vorrichtung dahingehend weiterzubilden, daß es möglich ist, ein Nutzsignal zu erfassen, das während der Dauer der Nachschwinger anfällt, sofern dieses Nutzsignal einen ausreichenden Pegelabstand vom durch die Nachschwinger gebildeten Untergrund aufweist, also ein ausreichender Nutzsignal-Störabstand vorhanden ist.

Diese Aufgäbe wird verfahrensmäßig dadurch gelöst, daß die Höhe des Schwellenwertes, oberhalb dessen das Nutzsignal liegen muß, um die Laufzeitmessung zu stoppen, im Anschluß an das Echostartsignal und in Anpassung an den Verlauf der Startechos zeitlich geändert wird, indem der Schwellenwert zunächst (erste Schwelle) einen hohen Wert hat, danach entsprechend einer vorgegebenen Funktion innerhalb einer einstellbaren Zeitdauer auf eine zweite Schwelle abfällt, deren Höhe einstellbar ist. Diese zweite Schwelle entspricht bei dem vorbekannten Verfahren dem unmittelbar nach Abschluß der Meßsperrzeit vorliegenden Schwellenwert.

Die Erfindung ermöglicht also, auf die Meßsperrzeit unter Umständen völlig zu verzichten. Sie schlägt vor, daß der Schwellenwert in amplituden- und zeitmäßiger Anpassung an den Verlauf des Startechos so gewählt und verändert wird, daß Nachschwinger im Startecho selbst nicht fälschlicherweise als Nutzsignal interpretiert werden, also nicht die Laufzeitmessung stoppen können. Demgemäß wird - wenn man auf eine Meßsperrzeit vollständig verzichtet - die zeitlich erste Schwelle so hoch gesetzt, daß sie größer ist als die Amplitude der ersten Halbwelle des Startechos. Die an die erste Schwelle folgende, zeitlich abfallende Rampe hat einen Spannungsverlauf und eine Zeitdauer, die bewirkt, daß die weiteren Halbwellen darunter bleiben, also den Schwellenwert nicht erreichen. Nach Abklingen der Nachschwinger bleibt die zweite Schwelle bestehen, sie ist im wesentlichen so gewählt, daß andere Störsignale die Laufzeitmessung nicht stoppen können.

Die Erfindung macht es sich im wesentlichen zu nutze, daß bei gleichen oder ähnlichen Prüfgegebenheiten, also beispielsweise die Benutzung eines gleichen Prüfkopftyps und vergleichbarer, zu prüfender Körper, die Nachschwinger bzw. das Ausschwingverhalten im wesentlichen konstant sind, so daß während einer Prüfung der Verlauf des erfindungsgemäßen zeitlich veränderten Schwellenwertes nicht neu eingestellt werden muß und bei ähnlichen Prüfaufgaben wieder derselbe Schwellenwertverlauf eingestellt werden kann.

In der Weiterbildung der Erfindung wird vorgeschlagen, daß durch das Echostartsignal zunächst während einer kurzen Meßsperrzeit einstellbarer Dauer die Weiterverarbeitung der Signale vollständig gesperrt wird und anschließend die Signalbewertung durch die zeitlich geänderten Schwellenwerte erfolgt. Die so gewählte Meßsperrzeit ist deutlich kürzer als die Meßsperrzeit bei dem vorbekannten Verfahren, sie beeinflußt daher die meßbare Restwanddicke praktisch nicht. Die Meßsperrzeit kann einerseits dadurch realisiert werden, daß zeitlich vor dem ersten Schwellenwert noch ein kurzer, stufenförmiger, wesentlich höherer Vorschwellenwert eingestellt wird oder in ansich bekannter Weise entsprechend dem vorbekannten Verfahren eine vollständige Sperrung stattfindet.

Das erfindungsgemäße Verfahren hat im wesentlichen nur Auswirkung während der Dauer der Nachschwinger. Nach Ablauf der Nachschwinger liegen dieselben Gegebenheiten wie bei dem vorbekannten Verfahren vor (zweite Schwelle). Der Unterschied zum vorbekannten Verfahren besteht aber darin, daß eine Signalverarbeitung auch während der Dauer der Nach- und Ausschwinger stattfinden kann. Sofern ein Nutzsignal ausreichend oberhalb des zeitlich gesteuert verlaufenden Schwellenwertes liegt, wird es erfaßt und stoppt die Laufzeitmessung.

Der wesentliche Vorteil des erfindungsgemäßen Verfahrens und der nach diesem Verfahren arbeitenden Vorrichtungen liegt in der einfachen Ausführung. Vorrichtungsmäßig ergibt sich ein geringer Aufwand, gegenüber den vorbekannten Vorrichtungen müssen die zusätzliche erste Schwelle und der rampenförmige Abfall des Schwellenwertes vorgesehen sein, die hierfür notwendigen, schaltungstechnischen Maßnahmen sind nicht aufwendig, denn ein Komparator für den zweiten Schwellenwert ist bei der vorbekannten Vorrichtung vorhanden, an diesen Komparator werden zunächst der erste Schwellenwert, danach der rampenförmige Spannungsverlauf und anschließend der zweite Schwellenwert angelegt.

Nun ist zwar aus der deutschen Patentschrift 33 39 984 ein Schall- bzw. Ultraschall-Entfernungsmeßgerät bekannt, bei dem für Luftschallanwendungen bei Einkopfbetrieb nach jedem Sendeimpuls die Verstärkung des Verstärkers in Abhängigkeit von der Zeit nach einer gespeicherten Funktion gesteuert wird, die entsprechend dem Ausschwingverhalten des Prüfkopfes festgelegt ist. Sie wird so gewählt, daß die vom Ausschwingen des Prüfkopfes stammenden elektrischen Empfangssignale kein Nutzsignal vortäuschen können.

Dieses vorbekannte Entfernungsmeßgerät ist nur für Luftschall vorgesehen, eine Schallvorlaufstrecke und damit ein Echostart sind nicht vorhanden, die Verstärkungsregelung ist wegen der im Vergleich zu festen oder flüssigen Körpern relativ kleinen Schallausbreitungsgeschwindigkeit in Luft einfach zu realisieren. Eine Übertragung dieses Prinzips auf Laufzeitmessungen in festen oder flüssigen Körpern ist - wenn überhaupt - nur mit hohem Aufwand möglich.

Bei dem aus der DE-A-28 53 170 vorbekannten Verfahren und der zugehörigen Vorrichtung wird in Abhängigkeit von der Höhe des Echostartsignals der einstellbare Schwellenwert gebildet. Weiterhin wird ein Anzeigenerwartungsbereich gebildet, der zeitlich so positioniert ist, daß das Nutzsignal in ihn hineinfällt mit der Folge, daß zeitlich gegenüber dem Nutzsignal frühere Störimpulse die Laufzeitmessung nicht stoppen können.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung im folgenden näher erläutert wird. In dieser Zeichnung zeigen:
- Fig. 1: Ein Blockschaltbild einer erfindungsgemäßen Vorrichtung, von der hier nur die zur Erläuterung der Erfindung notwendigen Einzelheiten dargestellt sind,
- Fig. 2: der zeitliche Verlauf der Spannungen am Punkt U im Detail-Blockschaltbild gemäß Fig. 1,
- Fig. 3: der zeitliche Verlauf der Spannung Uₘ des Meßtores mit Auslösung durch Echostart und Stoppen der Laufzeitmessung durch ein Nutzsignal,
- Fig. 4: ein Diagramm des zeitlichen Verlaufs des Schwellenwertes in zeitlicher Übereinstimmung mit den Figuren 2 und 3 und
- Fig. 5: ein U-t-Diagramm des Oberflächenechosignals (entsprechend Figur 2) und des zeitlichen Verlaufs der Spannung Uₛ des Schwellenwertes.

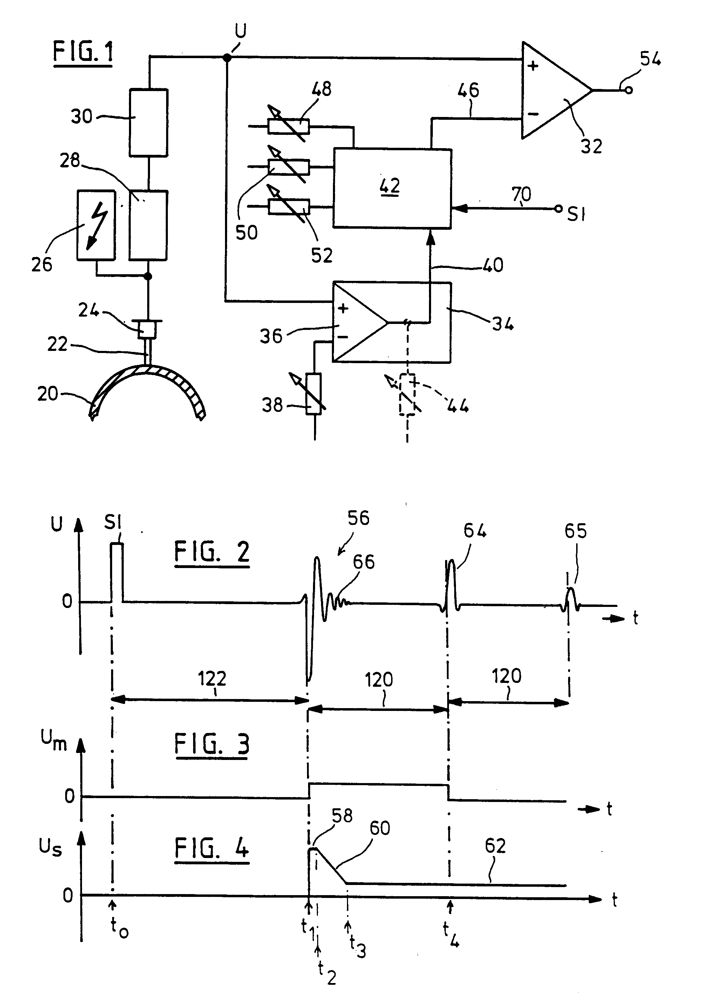

Bei der Vorrichtung gemäß Fig. 1 werden auf ein Prüfstück, das in der Figur als Rohr 20 dargestellt ist, aber auch ein Blech oder dergleichen sein kann, über eine Vorlaufstrecke 22 von einem Prüfkopf 24 Ultraschallimpulse gerichtet. In bekannter Weise treten diese teilweise in die Wand des Rohres 20 ein, teilweise werden sie von der Eintrittsfläche reflektiert und laufen direkt durch die Vorlaufstrecke 22 wieder in den Prüfkopf 24 zurück. Hierauf wird im einzelnen noch eingegangen.

Der Prüfkopf 24 ist mit einem Sender 26 und gleichzeitig mit einem Vorverstärker 28 verbunden, der Sender 26 wird durch eine hier nicht dargestellte Taktsteuerung ausgelöst und gibt einen Sendeimpuls SI ab, dieser und die nachfolgenden verschiedenartigen Echosignale werden vom Vorverstärker 28 aufgenommen und an einen Hauptverstärker 30 weitergeleitet. Die Gesamtverstärkung der Verstärkerkette aus Vorverstärker 28 und Hauptverstärker 30 ist einstellbar, bleibt aber während der Prüfung konstant.

Die verstärkten Signale am Ausgang des Hauptverstärkers 30 werden einerseits dem Plus-Eingang eines Komparators, andererseits einer Echostarteinrichtung 34 zugeleitet, die Verzweigung findet in einem Verzweigungspunkt U statt. Den Eingang der Echostarteinrichtung 34 bildet ein weiterer Komparator 36, dessen Plus-Eingang mit dem Verzweigungspunkt U verbunden ist, sein Minus-Eingang wird mit einer über ein Potentiometer 38 einstellbaren Spannung beaufschlagt. Am Ausgang dieses Komparators 36 erscheint nur dann ein Signal, wenn die Signalspannung vom Verzweigungspunkt U die am Potentiometer 38 eingestellte Vergleichsspannung übersteigt. Die Einstellung erfolgt so, daß der Komparator ein Signal abgibt, wenn am Verzweigungspunkt U das Signal des Startechos anliegt, dies führt in bekannter Weise zum sogenannten Echostart. Das Echostartsignal wird über eine Leitung 40 an eine Einstelleinrichtung 42 weitergegeben.

In einer geänderten Ausführung, in Fig. 1 gestrichelt dargestellt, wird das Echostartsignal mittels geeigneter Einrichtungen hinter dem Komparator 36 zeitlich verzögert, die Zeitdauer der Verzögerung ist mittels eines Potentiometers 44 einstellbar. Die Verzögerung bewirkt eine Meßsperrzeit, die zwischen 0 und 300 ns einstellbar ist.

Die Einstelleinrichtung 42 gibt an ihrem Ausgang 46, der mit dem Minus-Eingang des Komparators 32 verbunden ist, unmittelbar nach Eintreffen des (gegebenenfalls verzögerten) Echostartimpulses auf der Leitung 40 zunächst und kurzzeitig (für 0 bis 150 ns, z. B. 30 ns) eine Spannung mit der Höhe einer ersten Schwelle ab, der Spannungswert ist an einem Potentiometer 48 einstellbar. Nach Ablauf der vorgegebenen Zeit gibt die Einstelleinrichtung 42 eine rampenförmig abfallende Spannung ab, die Zeitdauer des Abfalls ist mittels eines Potentiometers 50 einstellbar. Diese Zeitdauer ist definiert durch die Zeit, die benötigt wird, damit die rampenförmig abfallende Spannung von der Höhe der ersten Schwelle auf die Höhe einer zweiten Schwelle abfällt. Der Wert dieser zweiten Schwelle wird mittels des dritten Potentiometers 52 eingestellt. Die zweite Schwelle entspricht der üblicherweise bei derartigen Einrichtungen vorhandenen Schwelle, bei den vorbekannten Vorrichtungen der hier in Rede stehenden Art liegt sie nach Abschluß der (längeren) Meßsperrzeit vor. Diese zweite Schwelle ist so bemessen, daß nach Abschluß der Nachschwinger noch auftretende Störungen anderer Art das Meßergebnis nicht beeinflussen können.

Demgemäß sperrt der Komparator 32 unmittelbar nach dem Eintreffen des (gegebenenfalls zeitlich verzögerten) Echostartsignals zunächst alle Signale unterhalb der Höhe der höheren ersten Schwelle, danach zeitlich sich ändernd alle Signale, die unterhalb des rampenförmigen Verlaufs liegen und schließlich, nach Beendigung des rampenförmigen Abfalls, alle Signale, die unterhalb der Höhe der zweiten Schwelle liegen. Am Ausgang 54 des Komparators 32, der mit der (hier nicht dargestellten) Schaltung für die Laufzeitmessung (Meßtorbildung) verbunden ist, erscheint daher nur ein Signal, wenn zu den gegebenen Zeitpunkten die jeweils vorhandenen Schwellenwerte überschritten werden.

Anstelle der analogen Ausführung, wie sie in Figur 1 beispielhaft dargestellt ist, kann auch eine teilweise oder vollständig digitalisierte Signalverarbeitung treten. Bei der teilweise digitalisierten Form entfallen die Potentiometer 48 bis 52 und ist in der Einstelleinrichtung 42 ein Speicher, insbesondere ein E-PROM vorgesehen, in dem die Höhe der ersten Schwelle 58, die Zeitdauer und der Funktionsverlauf der Rampe 60 und die Höhe der zweiten Schwelle 62 abrufbar abgespeichert sind, der Abruf erfolgt über den Sendeimpuls SI, der über eine Leitung 70 zugeführt wird.

In einer voll digitalisierten Ausführung befindet sich D/A-Wandler zwischen dem Hauptverstärker 30 und dem Verzweigungspunkt U, die anschließende Signalverarbeitung erfolgt digital in ansich bekannter Weise, also mittels eines Digitalkomparators 36 usw. Dann entfallen ebenfalls die Potentiometer 38 und 44.

Die bisher am Blockschaltdiagramm gemäß Fig. 1 diskutierten Vorgänge werden nun anhand der Diagramme gemäß den Figuren 2 bis 4 erläutert, diese Diagramme zeigen Spannungs-Zeitverläufe. Ein jeweiliger Prüfzyklus beginnt mit dem Sendeimpuls SI, der zum Zeitpunkt t0 beginnt und in der Darstellung gemäß Fig. 2, die den Spannungsverlauf am Verzweigungspunkt U zeigt, nur in schematischer Form als Rechteck angedeutet ist. Zum Zeitpunkt t0 startet ein Ultraschallimpuls vom Prüfkopf 24 durch die Vorlaufstrecke 22. Zum Zeitpunkt t1 gelangt der von der Eintrittsfläche des Rohres 20 reflektierte Anteil des Impulses wieder in den Prüfkopf 24, das von diesem aufgenommene und anschließend verstärkte Signal führt am Verzweigungspunkt U zu einem Signalverlauf 56. Aus der ersten und amplitudenmäßig größten Halbwelle wird in bekannter Weise in der Echostarteinrichtung 34 ein Echostartsignal abgeleitet, dies geschieht zum Zeitpunkt t1. Die Zeitdauer t0 bis t1 ist damit die Zeit für den Hin- und Rückweg des Impulses in der Vorlaufstrecke 22, sie ist in der Fig. 2 mit 122 bezeichnet. Zum Zeitpunkt t1 wird ebenfalls das Meßtor für die Laufzeitmessung (siehe Fig. 3) geöffnet. Weiterhin gibt die Einstelleinrichtung 42 beginnend mit dem Zeitpunkt t1 an ihrem Ausgang eine kurzzeitig vorliegende hohe Spannung mit der Höhe einer ersten Schwelle an, sie hat in Fig. 4 die Bezugsziffer 58. Kurzzeitig danach zum Zeitpunkt t2 fällt die Ausgangsspannung der Einstelleinrichtung 42 rampenförmig ab, der entsprechende Rampenbereich trägt die Bezugsziffer 60, bis die Spannung zum Zeitpunkt t3 die Höhe einer zweiten Schwelle erreicht, die dann bestehen bleibt, sie hat die Bezugsziffer 62. Wie ein Vergleich der Figuren 2 und 4 zeigt, liegt die zweite Schwelle bereits gegen Ende der Abklingzeit des Signalverlaufs 56, also des gesamten Startechosignals, vor.

Zum Zeitpunkt t4 überschreitet das Nutzsignal, also das erste, stoppende Rückwandecho, dessen Signalverlauf mit dem Bezugszeichen 64 in Fig. 2 versehen ist, den Wert der zweiten Schwelle 62 und stoppt zu diesem Zeitpunkt die Zeitmessung, das Zeittor wird also geschlossen (siehe Fig. 3). Die Zeitdauer t1 bis t4 ist die Laufzeit des Impulses von der Eintrittsfläche zur Rückwand und zurück zur Eintrittsfläche des Rohres 20. Sie hat in Fig. 2 die Bezugziffer 120. Dieselbe Zeitdauer 120 kann auch zwischen dem ersten und dem zweiten Rückwandecho (64, 65) gemessen werden, wenn das erste Rückwandecho 64 als Echostartsignal und das zweite Rückwandecho 65 als Nutzsignal verwendet wird. Das Signal 56 ist dann ausgetastet. Vor dem Zeitpunkt t1 ist die Ausgangsspannung der Einstelleinrichtung 42 Null, wie Fig. 4 zeigt.

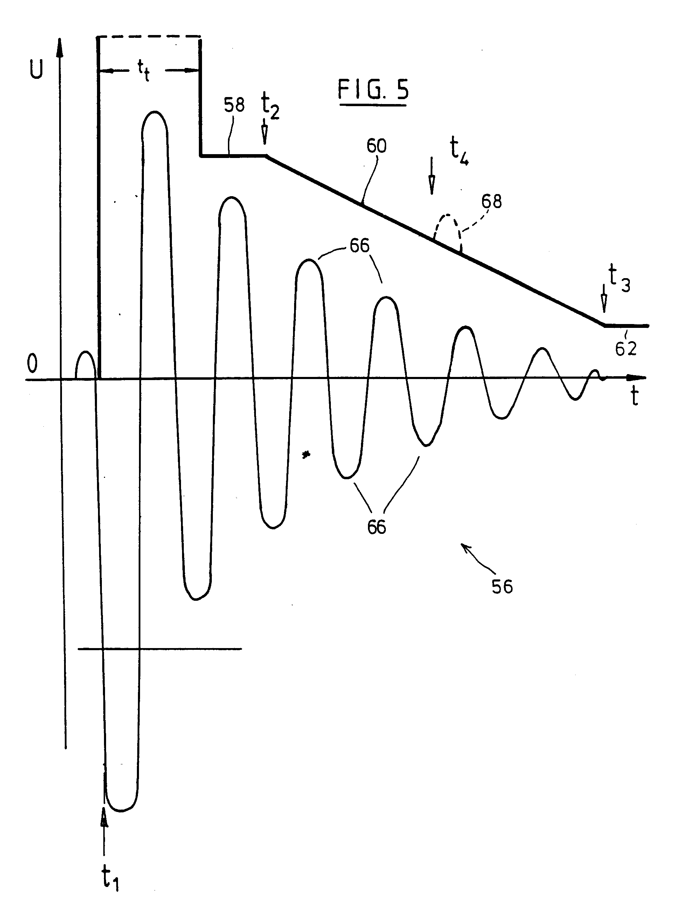

Anhand des Diagramms gemäß Fig. 5 werden die Signalverläufe zum Zeitpunkt des Startechos detaillierter erläutert: Zum Zeitpunkt t1 überschreitet das Echosignal die im Komparator 36 gesetzte Schwelle, damit wird (siehe Fig. 3) das Meßtor geöffnet. Während einer anschließenden Meßsperrzeit tₜ bleibt der Komparator 32 vollständig gesperrt. Im hier gezeigten Ausführungsbeispiel geschieht dies dadurch, daß dem Komparator 34 an seinem Minuseingang während einer Zeitdauer, die zwischen 0 und 300 ns einstellbar ist, ein Sperrsignal zugeführt wird. Nach Ablauf der Meßsperrzeit tₜ liegt während der einstellbaren Zeitdauer bis zum Zeitpunkt t2 der Spannungswert der ersten Schwelle 58 vor, dieser Wert liegt, wie Fig. 5 zeigt, deutlich oberhalb der Nachschwinger des Echostartsignals. Dies bleibt auch im weiteren erhalten: Der sich anschließende zeitlich abfallende Verlauf der Rampe 60 liegt spannungsmäßig so, daß die Nachschwinger 66 unterhalb der entsprechenden Spannungswerte der zeitlich veränderten Schwelle liegen, zum Zeitpunkt t3 hat die Rampe den Pegel der zweiten Schwelle 62 erreicht, zu diesem Zeitpunkt sind die Nachschwinger im wesentlichen abgeklungen.

Tritt nun vor dem Zeitpunkt t3 ein Nutzsignal 68 zum Zeitpunkt t4 auf, wird das Meßtor zu diesem Zeitpunkt geschlossen, wenn - wie dargestellt - dieses Nutzsignal 68 spannungsmäßig oberhalb der sich zeitlich verändernden Rampe liegt. In diesem Fall erscheint also am Ausgang des Komparators 32 ein Signal, durch das das Meßtor geschlossen wird. Zum besseren Verständnis sei hinzugefügt, daß das Meßtor nach dem Stand der Technik gestartet wird.

Anstelle des in den Figuren 4 und 5 dargestellten, geradlinigen Abfalls der Rampe 60 kann auch ein anderer Verlauf gewählt werden, beispielsweise ein Abfall nach einer quadratischen Funktion, einer e-Funktion oder dergleichen.

Anstelle der im Ausführungsbeispiel eingezeichneten Potentiometer 38, 44 und 48 bis 52 können auch andere, geeignete Einstellelemente für die entsprechenden Spannungswerte oder Zeitdauern vorgesehen sein.

## Patentansprüche

1. Verfahren zur Laufzeitmessung mittels Ultraschall in flüssigen oder festen Materialien nach der Impuls-Reflexionsmethode, bei dem von einem Prüfkopf (24) ein möglichst stoßwellenförmiger Impuls ausgesandt wird, der eine Vorlaufstrecke (22) durchläuft und teilweise von der Oberfläche des zu prüfenden Körpers (z. B. Rohr 20) reflektiert wird, teilweise in den zu prüfenden Körper eintritt und von dessen Rückwand, gegebenenfalls nach ein- oder mehrmaligem Hin- und Herlauf zwischen Oberfläche und Rückwand, in den Prüfkopf reflektiert wird, bei dem ein Echostartsignal, mit dem eine Laufzeltmessung gestartet wird, entweder aus dem von der Oberfläche in den Prüfkopf reflektierten Eintrittsecho oder aus einem von der Rückwand in den Prüfkopf reflektierten Rückwandecho abgeleitet wird; und bei dem die Laufzeitmessung später durch ein nachfolgendes als Nutzsignal (68) verwendetes Echosignal wieder gestoppt wird, sofern dessen Amplitude einen einstellbaren Schwellenwert (z. B. 62) überschreitet, dadurch gekennzeichnet, daß die Höhe des Schwellenwertes im Anschluß an das Echostartsignal und in Anpassung an den amplituden- und zeitmäßigen Verlauf des Startechos zeitlich geändert wird, wobei der Schwellenwert zunächst, während einer ersten, höheneinstellbaren Schwelle (58) einen hohen Wert hat und danach entsprechend einer vorgegebenen Funktion rampenförmig innerhalb einer einstellbaren Zeitdauer auf eine zweite, ebenfalls höheneinstellbare Schwelle (62) abfällt.

2. Verfahren nach Anspruch 1, dadurch gekennzeichnet, daß durch das Echostartsignal zunächst während einer Meßsperrzeit tₜ einstellbarer Dauer die Weiterverarbeitung der Signale vollständig gesperrt wird und anschließend die Signalbewertung durch die zeitlich geänderten Schwellenwerte erfolgt, wobei vorzugsweise die Meßsperrzeit tₜ Null bis dreihundert ns beträgt.

3. Verfahren nach einem der Ansprüche 1 oder 2, dadurch gekennzeichnet, daß die Höhe der ersten Schwelle (58), die Höhe der zweiten Schwelle (62) und die Zeitdauer des Abfalls der Rampe (60) von der Hohe der ersten Schwelle (58) auf die Höhe der zweiten Schwelle (62) einstellbar sind.

4. Verfahren nach einem der Ansprüche 1 bis 3, dadurch gekennzeichnet, daß die Zeitdauer der ersten Schwelle (58) im Bereich von Null bis 150 ns einstellbar ist.

5. Vorrichtung nach dem Oberbegriff des Patentanspruchs 1 zur Durchführung des Verfahrens nach einem der Ansprüche 1 bis 4 mit einem an den Ausgang eines Hauptverstärkers (30), an dem der Prüfkopf (24) angeschlossen ist, angeschlossenen Komparator (32), an dessen Ausgang (54) der Stopimpuls für die Laufzeitmessung erscheint, dadurch gekennzeichnet, daß der Komparator mit einer Einstellvorrichtung (42) verbunden ist, die mit dem Ausgang des Hauptverstärkers (30) und mit einem Eingang des Komparators (32) verbunden ist und getriggert durch das gegebenenfalls zeitlich verzögerte Echostartsignal zunächst analog oder digital erzeugt eine Spannung mit einem Spannungswert der ersten Schwelle (58), danach eine rampenförmig abfallende Spannung und letztendlich eine Spannung mit einem Spannungswert einer zweiten Schwelle (62) abgibt.

6. Vorrichtung nach Anspruch 5, dadurch gekennzeichnet, daß die Einstelleinrichtung (42) ein Potentiometer (44) für die Einstellung der Spannung der ersten Schwelle (58), ein Potentiometer (46) für die Einstellung der Zeitdauer des Abfalls der Spannung auf die Höhe der zweiten Schwelle (62) und ein Potentiometer (52) für die Einstellung der Höhe der zweiten Schwelle (62) aufweist.

7. Vorrichtung nach Anspruch 5, dadurch gekennzeichnet, daß die Einstelleinrichtung (42) einen Speicher, vorzugsweise einen frei programmierten Speicher, aufweist, in dem der Spannunswert der ersten Schwelle (58), die Zeitdauer und die Funktion des Abfalls im Bereich der Rampe (60) und der Spannungswert der zweiten Schwelle (62) in digitaler Form abgespeichert sind, und daß der Abruf dieser Abspeicherung über den Sendeimpuls (Leitung 70) erfolgt.

8. Vorrichtung nach Anspruch 7, dadurch gekennzeichnet, daß zwischen dem Hauptverstärker (30) und ein Verzweigungspunkt U zu dem Komparator (32) und der Einstellvorrichtung 42) ein A/D-Wandler vorgesehen ist und daß die nachfolgende Signalverarbeitung digital erfolgt.

9. Vorrichtung nach Anspruch 5 oder 6, dadurch gekennzeichnet, daß die Einstellvorrichtung weiterhin ein Einstellelement (Potentiometer 44) für die Einstellung einer mit dem Echostartsignal beginnenden Meßsperrzeit tₜ hat.

## Claims

1. A method of ultrasonic measurement of transit time in liquid or solid test pieces, using the pulse reflection method, in which a test head (24) transmits a pulse, if possible in the form of a shock wave, which travels through a buffer zone (22) and is partly reflected by the surface of the test piece (e. g. pipe 20) and partly enters the test piece and is reflected from the real surface thereof, eventually after one or more reciprocating passages, into the test head, wherein an echo start signal for starting a transit time measurement (echo start) is derived either from the entry echo or a back-wall echo reflected into the test head and wherein the transit time measurement is later on stopped by a subsequent echo signal used as wanted signal (68) provided its amplitude exceeds an adjustable threshold value (e. g. 62),
characterized in that the height of the threshold value is varied in time in connection with the echo start signal and in accordance with the variation in amplitude and time of the starting echo, the threshold value initially having a high value during a first threshold (58) of adjustable height, and then decreasing along a slope in accordance with a preset function and within an adjustable time to a second threshold (62), likewise adjustable in height.

2. A method according to claim 1, characterised in that the subsequent processing of the signals is completely blocked initially by the echo start signal during a measurement-blocking time tₜ of adjustable duration and subsequently the signal is evaluated by means of the periodically altered threshold values, the measurement-blocking time tₜ preferably being between zero and 300 ns.

3. A method according to claim 1 or 2, characterised in that the height of the first threshold (58), the height of the second threshold (62) and the duration of the slope (60) decreasing from the height of the first threshold (58) to the height of the second threshold (62) are adjustable.

4. A method according to any of claims 1 to 3, characterised in that the duration of the first threshold (58) is adjustable in the range from zero to 150 ns.

5. A device for working the method according to any of claims 1 to 4, comprising a comparator (32) connected to a main amplifier (30) and having an output (54) at which the pulse for stopping the transit-time measurement appears, characterised in that the comparator is connected to an adjusting device (42) which is triggered by the echo start signal, delayed if required, and initially generates an analog or digital voltage having a value as per the first threshold (58), followed by a voltage which decreases down a slope and finally delivers a voltage having a value as per a second threshold (62).

6. A device according to claim 5, characterised in that the adjusting device (42) comprises a potentiometer (44) for adjusting the voltage of the first threshold (58), a potentiometer (46) for adjusting the duration of the decrease in voltage to the height of the second threshold (62), and a potentiometer (52) for adjusting the height of the second threshold (62).

7. A device according to claim 5, characterised in that the adjusting device (42) comprises a store, preferably a freely programmable store, in which the voltage value of the first threshold (58), the duration and the function determining the decrease along the slope (60), and the voltage value of the second threshold (62) are stored in digital form, and the contents of the store is called in by the transmitter pulse (line 70).

8. A device according to claim 7, characterised in that an A/D converter is provided between the main amplifier (30) and the junction point U and the subsequent signal processing is digital.

9. A device according to claim 5 or 6, characterised in that the adjusting device also comprises an adjusting element (potentiometer 44) for setting a measurement-blocking time tₜ beginning with the echo start signal.

## Revendications

1. Procédé pour la mesure du temps de trajet au moyen d'ultra-sons dans des matériaux solides ou liquides selon la méthode de réflexion des impulsions, selon lequel un palpeur (24) envoie, dans la mesure du possible, une impulsion en onde de choc, qui traverse un parcours préliminaire (22) et qui est partiellement réfléchie par la surface du corps à palper (par exemple un tube 20), qui pénètre partiellement dans le corps à palper et qui est réfléchie par le fond, éventuellement après un ou plusieurs aller-retour entre la surface et le fond, dans le palpeur, selon lequel un signal de déclenchement de l'écho, avec lequel une mesure du temps de trajet est déclenchée, est dérivé soit à partir de l'écho d'entrée réfléchi par la surface dans le palpeur, soit à partir d'un écho de fond réfléchi par le fond dans le palpeur et selon lequel la mesure du temps de trajet est de nouveau stoppée ultérieurement par un signal d'écho subséquent utilisé comme signal utile (68), dans la mesure où son amplitude dépasse une valeur seuil réglable (par exemple 62), caractérisé en ce que la hauteur de la valeur seuil est modifiée temporellement à la suite du signal de déclenchement de l'écho et en adaptation à la variation en temps et en amplitude de l'écho de départ, la valeur seuil présentant tout d'abord une valeur élevée pendant un premier seuil (58) réglable en hauteur et, ensuite, conformément à une fonction prédéterminée, cette valeur chutant en forme de rampe pendant une période de temps réglable à un second seuil (62) également réglable en hauteur.

2. Procédé selon la revendication 1, caractérisé en ce que, par le signal de déclenchement de l'écho tout d'abord pendant un temps inactif de mesure tₜde durée réglable, la poursuite du traitement des signaux est complètement bloquée et ensuite l'analyse des signaux est effectuée par les valeurs seuil modifiées temporellement, le temps inactif de mesure tₜ s'élevant de préférence de zéro à trois cents ns.

3. Procédé selon l'une des revendications 1 ou 2, caractérisé en ce que la hauteur du premier seuil (58), la hauteur du second seuil (62) et la durée de la chute de la rampe (60) de la hauteur du premier seuil (58) à la hauteur du second seuil (62) sont réglables.

4. Procédé selon l'une des revendications 1 à 3, caractérisé en ce que la période de temps du premier seuil (58) est réglable dans une plage de 0 à 150 ns.

5. Dispositif selon le préambule de la revendication 1 pour la réalisation du procédé selon l'une des revendications de 1 à 4, présentant un comparateur (32) relié à la sortie d'un amplificateur principal (30) auquel est relié le palpeur (24), comparateur à la sortie (54) duquel apparaît une impulsion de choc pour la mesure du temps de trajet, caractérisé en ce que le comparateur est relié à un dispositif de réglage (42) qui est relié à la sortie de l'amplificateur principal (30) et à l'entrée du comparateur (32) et, du fait de son déclenchement par le signal de départ de l'écho éventuellement retardé temporellement, produit tout d'abord, de manière analogue ou digitale, une tension avec une valeur de tension du premier seuil (58), ensuite une tension descendante en forme de rampe et pour finir délivre une tension avec une valeur de tension d'un second seuil (62).

6. Dispositif selon la revendication 5, caractérisé en ce que le dispositif de réglage (42) présente un potentiomètre (44) pour le réglage de la tension du premier seuil (58), un potentiomètre (46) pour le réglage de la durée de la chute de la tension à la hauteur du second seuil (62) et un potentiomètre (52) pour le réglage de la hauteur du second seuil (62).

7. Dispositif selon la revendication 5, caractérisé en ce que le dispositif de réglage (42) présente une mémoire, de préférence une mémoire programmable, dans laquelle sont stockées, sous forme digitale, la valeur de tension du premier seuil (58), la durée et la fonction de la chute dans la zone de la rampe (60) et la valeur de tension du second seuil (62), et en ce que l'interrogation de cette mémorisation s'effectue par l'impulsion d'émission (ligne 70).

8. Dispositif selon la revendication 7, caractérisé en ce qu'entre l'amplificateur principal (30) et un point d'intersection U du comparateur (32) et du dispositif de réglage (42) est prévu un convertisseur A/D et en ce que le traitement subséquent des signaux se fait de manière digitale.

9. Dispositif selon la revendication 5 ou 6, caractérisé en ce que le dispositif de réglage présente, en outre, un élément de réglage (potentiomètre 44) pour le réglage d'un temps inactif de mesure tₜ commençant avec le signal de déclenchement de l'écho.
